# EUROPEAN PATENT APPLICATION

(11) **EP 4 216 129 A1**
(43) Date of publication of application: **26.07.2023**
(21) Application number: 22208718.1
(22) Date of filing: 22.11.2022
(51) Int. Cl.: G06Q 20/32, G06Q 20/20, G07G 1/06, G07G 1/12

(54) **MOBILE PAYMENT HANDOVER FOR SELF SERVICE TERMINALS**

(30) Priority: 25.01.2022 US 202217584107
(71) Applicant: SAP SE, 69190 Walldorf (DE)
(72) Inventor: KLIEM, Sebastian, 69190 Walldorf (DE); KLINGBEIL, Thomas, 69190 Walldorf (DE); PASTERNAK, Wanja, 69190 Walldorf (DE); WITT, Alexander, 69190 Walldorf (DE)
(74) Representative: Müller-Boré & Partner Patentanwälte PartG mbB

(57) **Abstract**

Disclosed herein are system, method, and computer program product embodiments for mobile payment handover for self-service terminals. An embodiment operates by generating handover data configured to instruct a user device to settle an amount due. The embodiment further operates by obtaining an electronic confirmation that the amount due has been settled. Subsequently, the embodiment operates by determining that the amount due has been settled responsive to the electronic confirmation.

## Description

### BACKGROUND

Self-service ordering and payment solutions have become increasingly important for merchants operating in physical shops such as restaurants. For example, a merchant may provide a tablet device at each table of the merchant's restaurant to allow customers to order goods, such as food and drinks, from their individual table. The devices used for this purpose are regular off-the-shelf components. Although the ordering process can be implemented through custom software, the payment of the ordered goods often provides a challenge, as the processing of the payment cannot be easily handled on that device when it lacks the hardware for reading a payment card or accepting mobile payments such as Apple Pay^{™} and Google Pay^{™}.

### BRIEF DESCRIPTION OF THE DRAWINGS

The accompanying drawings are incorporated herein and form a part of the specification.
FIG. 1 is a block diagram of a mobile payment handover system, according to some embodiments.
FIG. 2 is a block diagram of another mobile payment handover system, according to some embodiments.
FIG. 3 is a block diagram of another mobile payment handover system, according to some embodiments.
FIG. 4 is a sequence diagram of another mobile payment handover system, according to some embodiments.
FIG. 5 is a block diagram of another mobile payment handover system, according to some embodiments.
FIG. 6 is a sequence diagram of another mobile payment handover system, according to some embodiments.
FIG. 7 is a block diagram of another mobile payment handover system, according to some embodiments.
FIG. 8 is a flowchart illustrating a process for mobile payment handover for self-service terminals, according to some embodiments.
FIG. 9 is an example computer system useful for implementing various embodiments.

In the drawings, like reference numbers generally indicate identical or similar elements. Additionally, generally, the left-most digit(s) of a reference number identifies the drawing in which the reference number first appears.

### DETAILED DESCRIPTION

Provided herein are system, apparatus, device, method and/or computer program product embodiments, and/or combinations and sub-combinations thereof, for providing mobile shopping cart payment handover from self-service merchant payment terminals to customer device (e.g., customer smartphones, digital wallets, etc.) for individualized payment.

As discussed above, the payment of the ordered goods often provides a challenge, as the processing of the payment cannot be easily handled on a merchant's tablet device when it lacks the hardware for reading a payment card or accepting mobile payments such as Apple Pay^{™} and Google Pay^{™}. Potential workarounds can be similarly problematic. In one example, merchants can provide their traditional tablet devices with an additional payment device (e.g. SumUp^{™}), which needs to be linked to the tablet and be maintained). In another example, merchants can only accept payments at their checkout registers (e.g., point of sale terminals), which might be an inconvenience to customers, especially when trying to limit contact with other people. In yet another example, merchants can require customers to enter payment data (e.g., credit card numbers) on the merchants' tablet devices, which creates multiple security risks. In still another example, merchants can use a digital payment solution (e.g., PayPal^{™}), where customers need to transfer the amount to a defined address so that it can be matched in the backend. This may limit the form of payment to one specific provider and might also cause problems if data has been entered incorrectly. Accordingly, there is no straightforward way for customers to pay their bill without the use of special hardware, inconveniences, or security risks.

In contrast, the system, apparatus, device, method and/or computer program product embodiments, and/or combinations and sub-combinations thereof, described herein solve these technological problems by providing a handover of the payment process from the tablet device owned by the merchant to the personal device of the customer. For example, as soon as the customer decides to request to pay the bill, the merchant's tablet device can present a QR code, which can then be scanned with the customer's mobile device (e.g., via a camera app). This can initiate the loading of the merchant's web shop on the customer's mobile device, where the actual payment also can be initiated and completed locally on the customer's mobile device. The merchant only receives a confirmation of the payment, without gaining knowledge of the exact payment data (e.g., credit card number). The techniques described herein can be applied to multiple merchants, such as: restaurants where customers are enabled to pay the bill at the table in self-service; "traditional" restaurants where customers finish the payment on their own devices; physical stores where customers use a self-checkout; and physical stores where a cashier processes the items, but the payment is moved to the customer's device rather than the merchant's device.

There are many exemplary aspects to the system, apparatus, device, method and/or computer program product embodiments, and/or combinations and sub-combinations thereof, disclosed herein. For example, embodiments of the present disclosure provide for a system that can hand over the whole shopping cart to another device, where the actual payment process can be initiated and be completed on that other device as well. As a result of these and other embodiments described herein, the input of the payment data can be handled by the customers on the customers' devices, no sensitive payment data needs to be entered on a publicly available device (e.g., the tablet owned by the merchant), reducing the risk of data theft; no additional hardware is required in the merchant infrastructure to process the payment; more flexibility is provided in the payment process, as the whole shopping cart, rather than the payment itself, is shifted, allowing a more individual choice of payment options; and customers can use payment options available on their personal devices (e.g., Apple Pay^{™}, Google Pay^{™}, payment apps) to settle the bill.

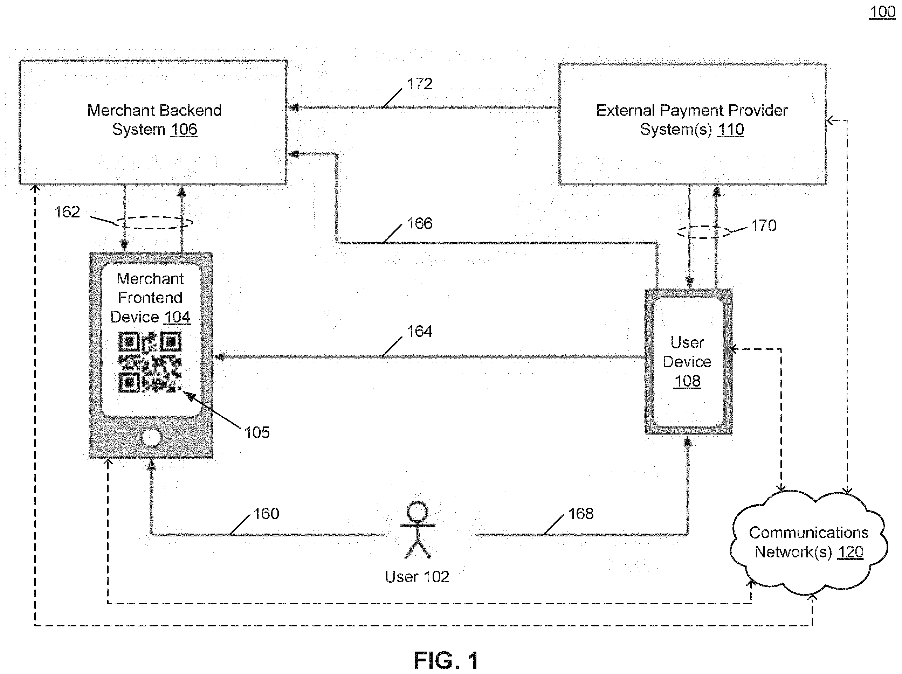

FIG. 1 is a block diagram of a mobile payment handover system 100, according to some embodiments. Mobile payment handover system 100 can include a merchant frontend device 104, a user device 108 operated by a user 102 (e.g., a customer of the merchant), a merchant backend system 106 (e.g., including, but not limited to a merchant backend server), and one or more external payment provider systems, communicatively coupled via one or more communications networks 120.

In some embodiment, the merchant frontend device 104 can include a self-service point-of-sale (POS) device (e.g., also referred to as a "self-service terminal"), a tablet computer, a mobile device, a laptop computer, a desktop computer, any other suitable device, or a combination thereof. For example, the merchant frontend device 104 can include a self-service tablet device located at a restaurant table where the user 102 consumes a meal and then pays for the meal using the user device 108.

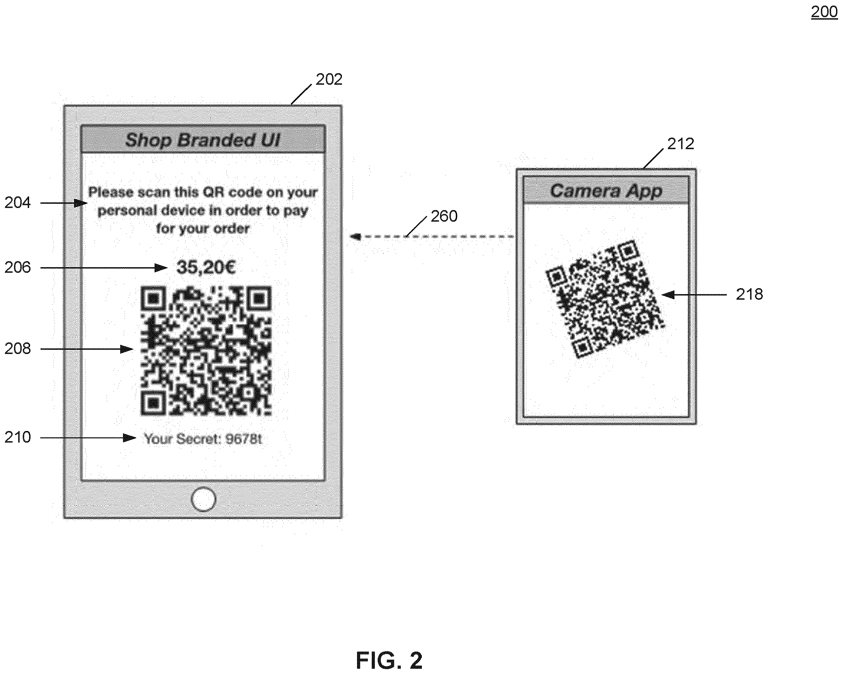

In some embodiments, the user device 108 can include a mobile device (e.g., a smartphone), a laptop computer, a tablet computer, a wearable computer (e.g., a smartwatch), any other suitable device, or a combination thereof. In several embodiments, one or both of the merchant frontend device 104 and the user device 108 can function as a stand-alone device separate from other devices of the mobile payment handover system 100. The term "stand-alone" can refer to a device being able to work and operate independently of other devices. In several embodiments, the merchant frontend device 104 and the user device 108 can store and execute discrete software applications, such as those discussed with reference to FIGS. 2-7. For example, the merchant frontend device 104 can store and execute a payment user interface (UI) application (e.g., a merchant or shop branded UI), any other suitable application configured to provide the various functionalities described herein, or a combination thereof. In another example, the user device 108 can store and execute an image capture application (e.g., a camera app), a web browser, a short message service (SMS) messaging application, a multimedia messaging service (MMS) messaging application, an electronic mail (e-mail) application, an application developed by one of the one or more external payment provider systems 110 (e.g., a PayPal^{™} app), any other suitable application configured to provide the various functionalities described herein, or a combination thereof.

In some embodiments, the merchant backend system 106 may be part of a backend computing infrastructure, including a server infrastructure of a company or institution, to which the merchant frontend device 104 belongs. In some embodiments, the merchant backend system 106 can include a backend as a service (BaaS) system, a mobile backend as a service (MBaaS) system, a content as a service (CaaS) system, a digital content as a service (DCaaS) system, a desktop as a service (DaaS) system, a framework as a service (FaaS) system, an infrastructure as a service (IaaS) system, a software as a service (SaaS) system, a managed software as a service (MSaaS) system, any other suitable cloud platform or "as a service" system, any local or on-premises software (e.g., "on-premise" cloud-based solutions), or any combination thereof.

While the merchant backend system 106 is described and shown as a single component in FIG. 1, this is merely an example. In some embodiments, the merchant backend system 106 can include a variety of centralized or decentralized computing devices. For example, the merchant backend system 106 may include a mobile device, a laptop computer, a desktop computer, grid-computing resources, a virtualized computing resource, cloud computing resources, peer-to-peer distributed computing devices, a server farm, or a combination thereof. The merchant backend system 106 may be centralized in a single room, distributed across different rooms, distributed across different geographical locations, or embedded within the one or more communications networks 120. While the one or more devices of the merchant backend system 106 can couple with the one or more communications networks 120 to communicate with the merchant frontend device 104, the user device 108, and the one or more external payment provider systems 110, the one or more devices of the merchant backend system 106 can also function as stand-alone devices separate from other devices of the mobile payment handover system 100. In some embodiments, the merchant backend system 106 can be implemented using cloud computing resources of a public or private cloud. A private cloud refers to a cloud environment similar to a public cloud with the exception that it is operated solely for a single organization.

In some embodiments, the one or more payment provider systems 110 can include one or more remote servers and data storage devices. In some embodiments, the one or more payment provider systems 110 can be operated by different payment providers, such as VISA^{™}, Apple Pay^{™}, PayPal^{™}, American Express (AMEX)^{™}, gift card payment providers (e.g., including, but not limited to, merchant gift cards), cryptocurrency payment providers (e.g., Bitcoin), Google Pay^{™}, Amazon Pay^{™}, and other payment providers.

In some embodiments, the one or more communications networks 120 can include, without limitation, wired and/or wireless intranet, extranet, Internet, cellular, Wi-Fi, radio frequency (RF), infrared (IR), Bluetooth, near field communication (NFC), and/or any other near-field, short range, long range, local, regional, global communications network, as well as any combination thereof.

In some embodiments, the merchant backend system 106 can receive a payment request 160 initiated by the user 102 of the user device 108. For example, the user 102 or a merchant employee may indicate that the user 102 is ready to pay by pressing a button (e.g., a physical button or a virtual button) on the merchant frontend device 104. In response to the user input, the merchant frontend device 104 can generate a payment request 160 and transmit the payment request 160 to the merchant backend system 106 via the one or more communications networks 120.

In some embodiments, the merchant backend system 106 can receive the payment request 160 from the merchant frontend device 104 and generate payment handover data 162 configured to instruct the user device 108 to complete a payment associated with the payment request 160. The payment handover data 162 can include, for example, a unique payment URL associated with the payment. The unique payment URL can include, for example, a base URL, a path to the payment, and a unique ID of the payment to be settled.

In some embodiments, the payment handover data 162 can include a two-dimensional barcode 105 (e.g., a quick response (QR) code) that includes the unique payment URL. In such embodiments, the merchant frontend device 104 can display the two-dimensional barcode 105 on a display screen of the merchant frontend device 104, where the displayed two-dimensional barcode 105 is configured to be captured by a camera of the user device 108 and, upon capture by the user device 108, to instruct the user device 108 to open a webpage corresponding to the unique payment URL

In some embodiments, the payment handover data 162 can include a text message (e.g., a short message service (SMS) text message) that includes the unique payment URL. In such embodiments, the merchant backend system 106 can transmit the text message to the user device 108, where the transmitted text message can be configured to be received by the user device 108 and, upon receipt by the user device 108, to instruct the user device 108 to open a webpage corresponding to the unique payment URL

In some embodiments, the payment handover data 162 can include an e-mail message that includes the unique payment URL. In such embodiments, the merchant backend system 106 can transmit the e-mail message to the user device 108, where the transmitted e-mail message can be configured to be received by the user device 108 and, upon receipt by the user device 108, to instruct the user device 108 to open a webpage corresponding to the unique payment URL

In some embodiments, the payment handover data 162 can include an NFC tag that includes the unique payment URL. In such embodiments, the merchant backend system 106 can provide the NFC tag via the merchant frontend device 104, where the provided NFC tag can be configured to be detected by the user device 108 and, upon detection by the user device 108, to instruct the user device 108 to open a webpage corresponding to the unique payment URL

In some embodiments, the merchant backend system 106 can generate cryptographic data (e.g., a numeric or alphanumeric secret token) and include the cryptographic data in the payment handover data (e.g., in the unique payment URL following a "#" symbol). In such embodiments, the merchant backend system 106 can receive, from the user device 108, an electronic confirmation 166 that the user device 108 has opened a webpage corresponding to the unique payment URL and transmit the cryptographic data to one of the one or more external payment provider systems 110 (e.g., a payment server configured to process the payment) only in response to receiving the electronic confirmation 166.

In some embodiments, when the user 102 decides to request to pay the bill, the merchant frontend device 104 can present the two-dimensional barcode 105, which the user 102 can capture using the user device 108 (e.g., via a camera app) as indicated by reference arrow 164 (e.g., scan the two-dimensional barcode 105 with the camera of the user device 108). This can initiate the loading of the merchant's web shop on the user device 108 as indicated by reference arrow 166 (e.g., fetch payment details), where the actual payment also can be initiated and completed locally on the user device 108 as indicated by reference arrow 168 (e.g., specify payment details using the user device 108) and reference arrow 170 (e.g., process payment between the user device 108 and one of the one or more external payment provider systems 110). The merchant backend system 106 only receives an electronic confirmation 172 of the payment, without gaining knowledge of the user 102's payment data (e.g., credit card number).

In some embodiments, merchant backend system 106 can receive, from the one of the one or more external payment provider systems 110, an electronic confirmation 172 that the payment has been completed by the user device 108. In some embodiments, the merchant backend system 106 can determine that the payment is complete in response to receiving the electronic confirmation 172.

FIG. 2 is a block diagram of a mobile payment handover system 200, according to some embodiments. The mobile payment handover system 200 can include a merchant frontend device 202 and a user device 212, communicatively coupled via one or more communications networks (e.g., one or more communications networks 120 described with reference to FIG. 1). The mobile payment handover system 200 can generate a QR code 208 and a secret token 210 that are presented on a display screen of the merchant frontend device 202 and scanned by a camera of the user device 212.

As shown in FIG. 2, the merchant frontend device 202 can execute a payment UI application (e.g., "Shop Branded UI") configured to display, on a display screen of the merchant frontend device 202, an electronic message 204 (e.g., "Please scan this QR code on your personal device in order to pay for your order"), a total amount due 206 (e.g., "35,20€"; the bill amount), the QR code 208, and the secret token 210 (e.g., "9678t"). The QR code 208 can include, for example: (i) a pre-defined base URL pointing to a web server of the merchant software infrastructure (e.g., "https://shop.url"); (ii) a path to the payment resource (e.g., "/cart"); (iii) a unique identification of the payment to be settled (e.g., the globally unique identifier (GUID) "5c663848-e3c4-4176-8119-5dle46c3be4c"); and (iv) an additional secret token (e.g., the alphanumeric string "9678t") added to the URL after a "#" symbol (e.g., "#9678t"), which is not transmitted to the external payment provider system right away, but only once the page has been loaded by the user device 212. In this example, the full URL included in the QR code 208 may be "https://shop.url/cart/5c663848-e3c4-4176-8119-5dle46c3be4c#9678t."

As further shown in FIG. 2, the user device 212 can execute an image capture application (e.g., "Camera App"). In 260, the user device 212 can be configured to scan or otherwise capture the QR code 208 as a captured QR code 218.

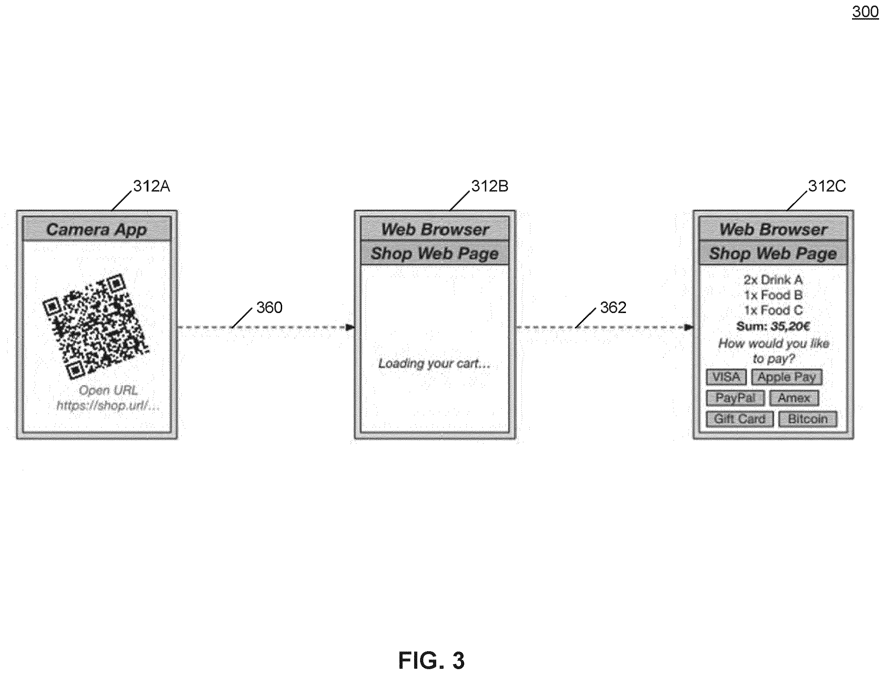

FIG. 3 is a block diagram of a mobile payment handover system 300, according to some embodiments. The mobile payment handover system 300 can include a user device in different states, such as a first state of the user device 312A, a second state of the user device 312B, and a third state of the user device 312C. The mobile payment handover system 300 can provide for merchant web shop loading on the user device (e.g., shown from the user's perspective).

As shown in FIG. 3, the first state of the user device 312A can execute an image capture application (e.g., "Camera App") to capture a QR code. In 360, after capturing the QR code, the second state of the user device 312B can execute a web browser application (e.g., "Web Browser") to open the URL included in the captured QR code and display the merchant's web page (e.g., "Shop Web Page"). In 362, once the user's cart has loaded, the third state of the user device 312C can execute the web browser application to view the user's cart as well as the user's payment options (e.g., "VISA"; "Apple Pay"; "PayPal"; "Amex"; "Gift Card"; "Bitcoin").

In some embodiments, the mobile payment handover system 300 can perform 360 and 362 without interaction with the user. In some embodiments, by using an additional secret, knowledge of only the identifier of the shopping cart (e.g., the GUID) may not be sufficient to retrieve the details and the payment options. In some embodiments, only if the secret is also known (e.g., as with the QR code 208 described with reference to FIG. 2) can the data for the payment options be loaded.

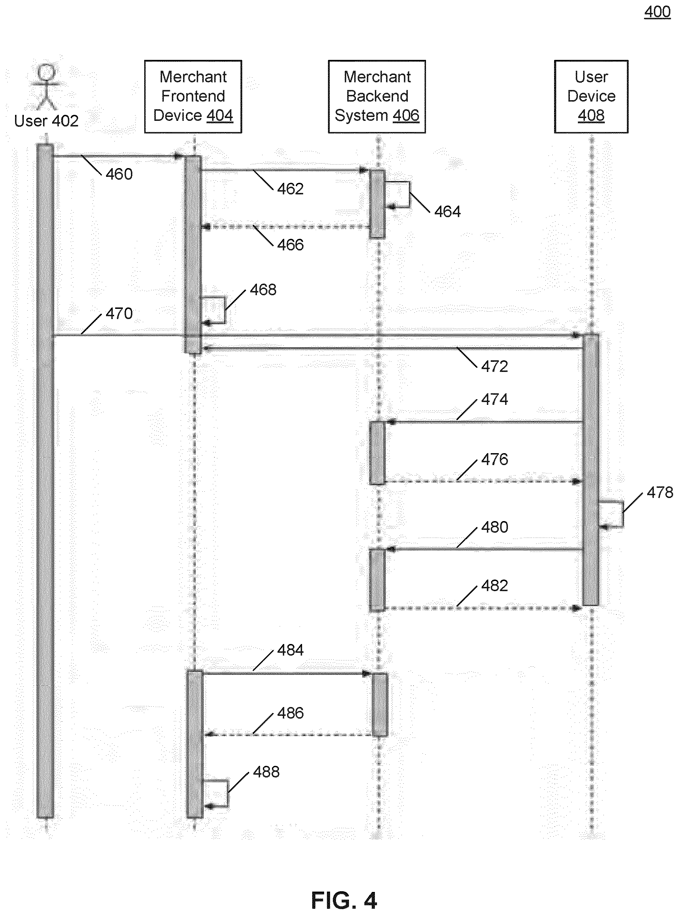

FIG. 4 is a sequence diagram of a mobile payment handover system 400, according to some embodiments. The mobile payment handover system 400 can include a merchant frontend device 404, a merchant backend system 406, and a user device 408, communicatively coupled via one or more communications networks (e.g., one or more communications networks 120 described with reference to FIG. 1). The mobile payment handover system 400 can perform a technical process for transferring a shopping cart to the user device 408.

In 460, the payment process starts by the user 402 requesting a payment on the merchant frontend device 404 (e.g., a tablet device at the user's table in a restaurant). In 462, the merchant frontend device 404 requests the required information to transfer the user's shopping cart from the merchant backend system 406 to the user device 408. In 464, the merchant backend system 406 generates a secret token and associates (e.g., stores) it internally with the identification of the currently processed order (e.g., a shopping cart ID, which could be represented with a GUID). In 466, the merchant backend system 406 generates a QR code with the shopping cart ID and secret token and transmits the QR code (or the data required to generate a QR code locally on the merchant frontend device 404) to the merchant frontend device 404. In 468, the merchant frontend device 404 displays the QR code on a display screen of the merchant frontend device 404. In addition to presenting the QR code, the merchant frontend device 404 can also display the secret token as a text on the display screen of the merchant frontend device 404, such that the user 402 can manually enter the secret token on the user device 408 at a later stage (e.g., if required due to a technical malfunction or limitation in device capabilities).

In 470, the user 402 can use the user device 408 (e.g., using a camera and a camera app of the user device 408) to scan the QR code displayed on the display screen of the merchant frontend device 404. In some embodiments, this scanning can be manually started by the customer. In 472, the user device 408 interprets the data in the scanned QR code and allows the user 402 to open a web browser with the URL contained in the QR code. In 474, the web browser executing on the user device 408 loads the source code of a web page (e.g., the merchant's web shop with the shopping cart ID included in the QR code) from the web server of the merchant backend system 406 through an HTTP(S) GET-Request. In 476, the web browser executing on the user device 408 displays the initial version of the web page. After loading the initial web page, the user might be presented a loading screen while the next step is completed. In some embodiments, this might happen so fast that the loading screen is not visible to the user 402. In 478, during the web page loading step, the user device 408 extracts the locally available secret token from the URL (e.g., the part of the URL after the "#" symbol, which is not part of the initial HTTP(S)-Request). In 480, the user device 408 asynchronously sends the secret token to the merchant backend system 406 to request the content of the shopping cart. In 482, the merchant backend system 406 transmits the shopping cart information and available payment options to the user device 408, which is then displayed on the user device 408.

In 484, 486, and 488, while the user 402 interacts with the user device 408, the merchant frontend device 404 synchronizes with the merchant backend system 406 based on a scheduled interval to make sure that all displayed information (e.g., payment status) is up-to-date. In 484, the merchant frontend device 404 synchronizes the state of the shopping cart with the merchant backend system 406. In 486, the merchant backend system 406 transmits the current state of the shopping cart to the merchant frontend device 404. In 488, the merchant frontend device 404 displays updates, if needed.

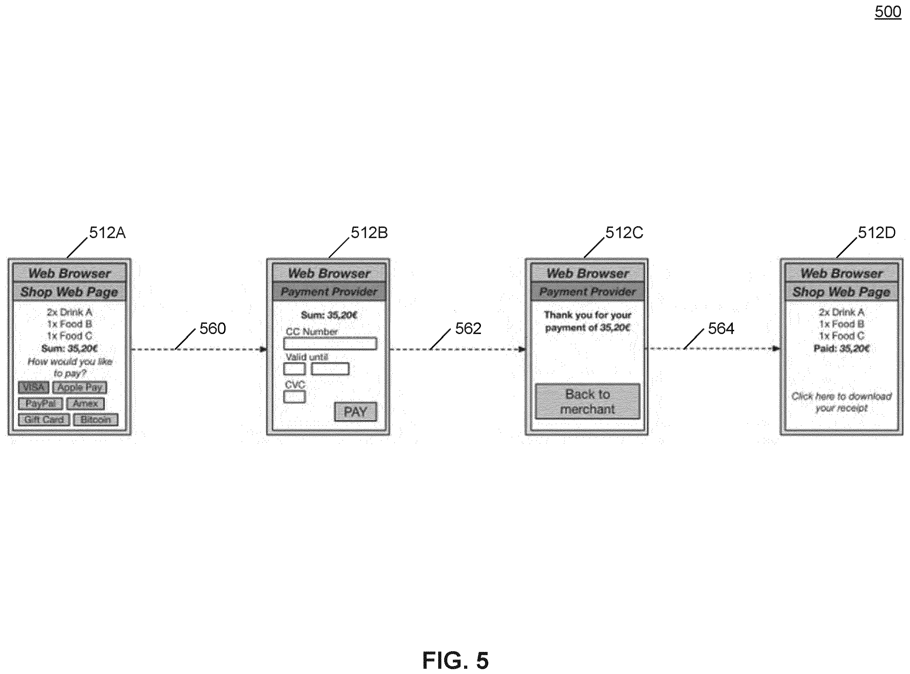

FIG. 5 is a block diagram of a mobile payment handover system 500, according to some embodiments. The mobile payment handover system 500 can include a user device in different states, such as a first state of the user device 512A, a second state of the user device 512B, a third state of the user device 512C, and a fourth state of the user device 512D. The mobile payment handover system 500 can provide for a payment process on the user device (e.g., shown from the user's perspective). In some embodiments, the payment can be completed on the user device by specifying a means of payment, such as: (i) a credit card by entering the credit card data on the web page of the provider; (ii) a bank transfer through defined services, which allow an immediate confirmation; (iii) a payment app (e.g., PayPal^{™} app); and (iv) a mobile payment (e.g., Apple Pay^{™} or Google Pay^{™}), where the means of payment can be provided by the user device itself.

As shown in FIG. 5, the first state of the user device 512A can execute a web browser application, or a merchant's or service provider's companion application, to open a merchant web page through which the user can select a payment option (e.g., "VISA"). In 560, after the user selects the payment option, the second state of the user device 512B can execute the web browser application to open a payment provider web page (e.g., "Payment Provider") associated with the selected payment option. In 562, the third state of the user device 512C can receive data and confirmation to process the payment input by the user through the web browser application. The payment is then processed accordingly in an interaction between the user device and the external payment provider system. In 564, once the payment has been confirmed, the fourth state of the user device 512D can execute the web browser application to re-open the merchant web page, where the payment is also confirmed and additional options (e.g., download of the invoice or receipt) are displayed.

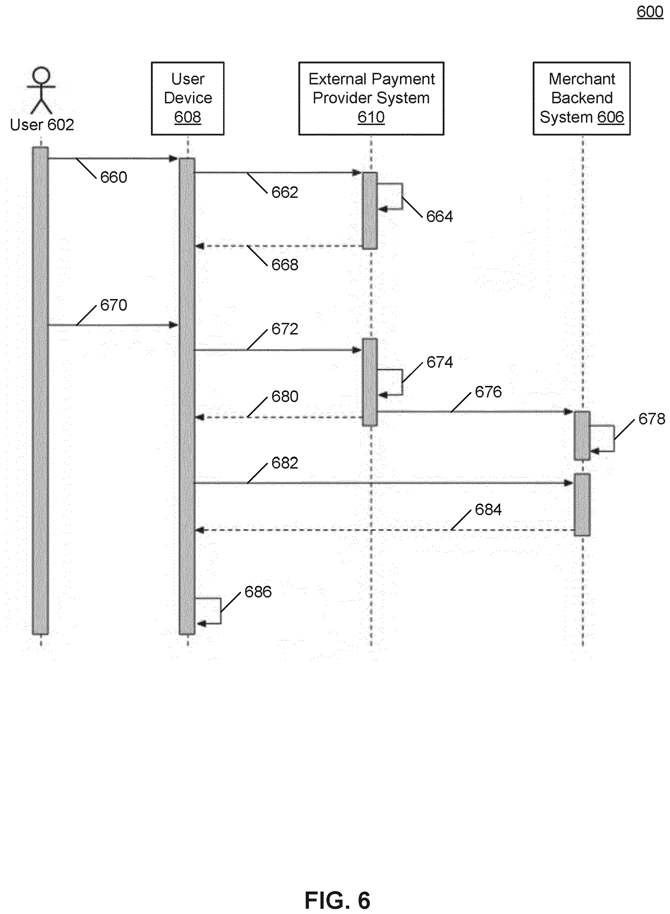

FIG. 6 is a sequence diagram of a mobile payment handover system 600, according to some embodiments. The mobile payment handover system 600 can include a user device 608, a merchant backend system 606, and an external payment provider system 610, communicatively coupled via one or more communications networks (e.g., one or more communications networks 120 described with reference to FIG. 1). The mobile payment handover system 600 can perform a technical process for processing a payment on the user device 608.

In 660, the user 602 selects a payment option using the user device 608. In 662, the user device 608 initiates the payment with the infrastructure of the external payment provider system 610, with the merchant as the recipient and the shopping cart ID as the payload. In 664, the external payment provider system 610 performs internal pre-processing and preparation of the payment. In 668, the external payment provider system 610 returns this information to the user device 608 and requests payment details (e.g., login credentials, credit card information, etc.). The corresponding data entry fields for completing the payment are presented on the user device 608, which can include: (i) a web page of the payment provider (e.g., to enter the credit card number); (ii) an application installed already on the user device 608 (e.g., the app of a payment provider like PayPal^{™}); or (iii) a functionality integrated into the operating system of the user device 608 (e.g., Apple Pay^{™} on iPhones^{™} or Google Pay^{™} on Android^{™} devices). In 670, the user 602 inputs the required payment data and confirms the payment with the payment provider's means of interaction.

In 672, the user device 608 transmits the payment data input by the user 602 to the external payment provider system 610. In 674, the external payment provider system 610 internally processes the payment data. In 676, after completion of the payment processing by the external payment provider system 610, the external payment provider system 610 transmits, to the merchant backend system 606, an electronic confirmation of the completed payment with the shopping card ID and the amount paid. This confirmation might either take place: (a) directly from the external payment provider system 610 to the merchant backend system 606 through the unique bill or transaction code (e.g., the GUID); or (b) indirectly from the external payment provider system 610 to the user device 608 and from there to the merchant backend system 606, after which the merchant backend system 606 can confirm the authenticity of the payment with the external payment provider system 610. In 678, after the payment confirmation, the merchant backend system 606 internally links the completed payment to shopping cart and generates an invoice or receipt. In 680, the external payment provider system 610 transmits the payment confirmation to the user device 608 for display to the user 602 (and, in some aspects, for transmission to the merchant backend system 606).

In 682, the user device 608 returns to the merchant web page and fetches shopping cart updates from the merchant backend system 606 to update the displayed shopping cart. In 684, the merchant backend system 606 transmits the shopping cart updates to the user device 608. In 686, the user device 608 updates the displayed shopping cart (e.g., to confirm that the goods have been paid for). In some embodiments, the merchant backend system 606 keeps on retrieving updates on the shopping cart status and thus is immediately aware of the processed payment, which is then displayed to the user 602 via a merchant frontend device.

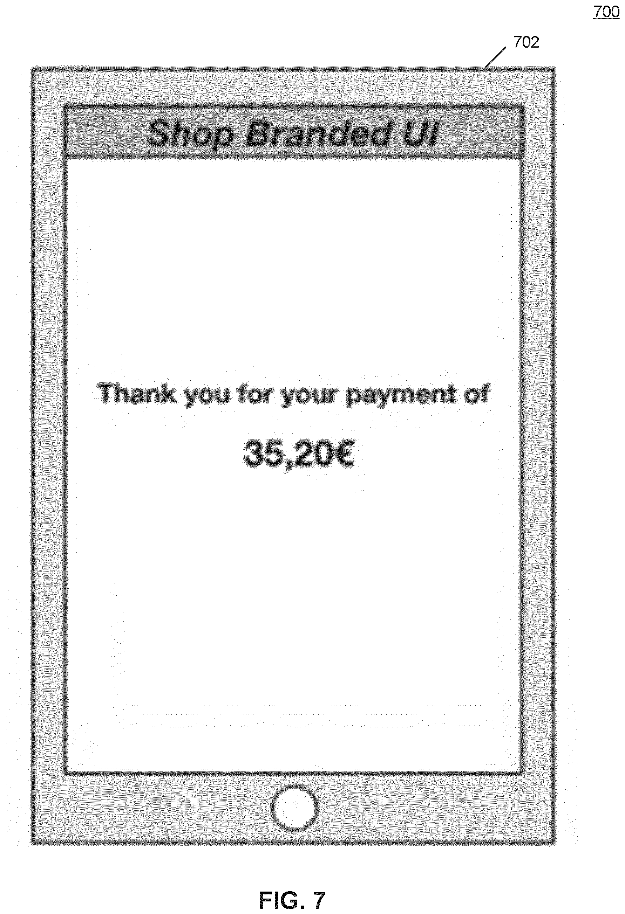

FIG. 7 is a block diagram of a mobile payment handover system 700, according to some embodiments. The mobile payment handover system 700 can include a merchant frontend device 702. The mobile payment handover system 700 can provide for displaying a confirmation of the payment (e.g., "Thank you for your payment of 35,20€") on a display screen of the merchant frontend device 702.

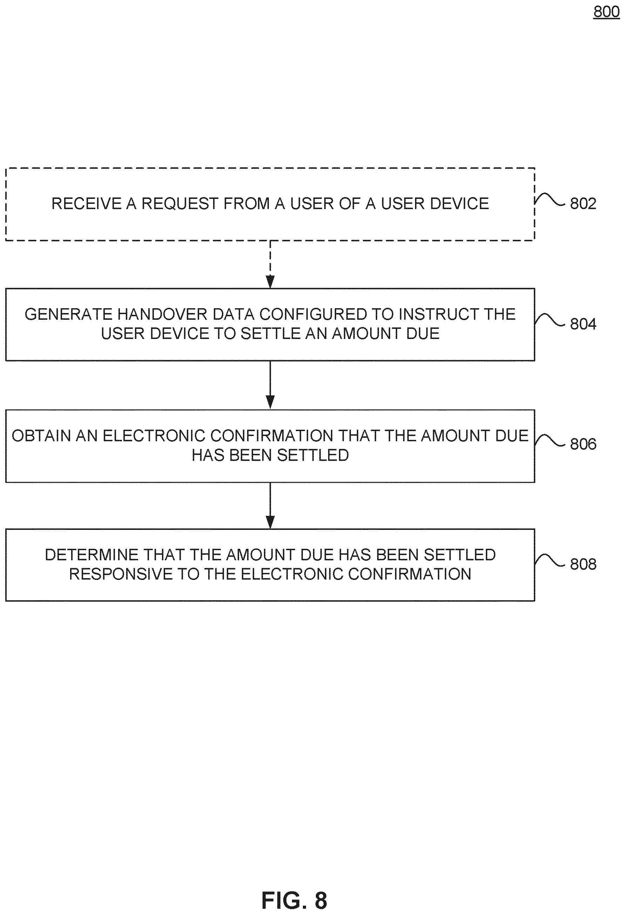

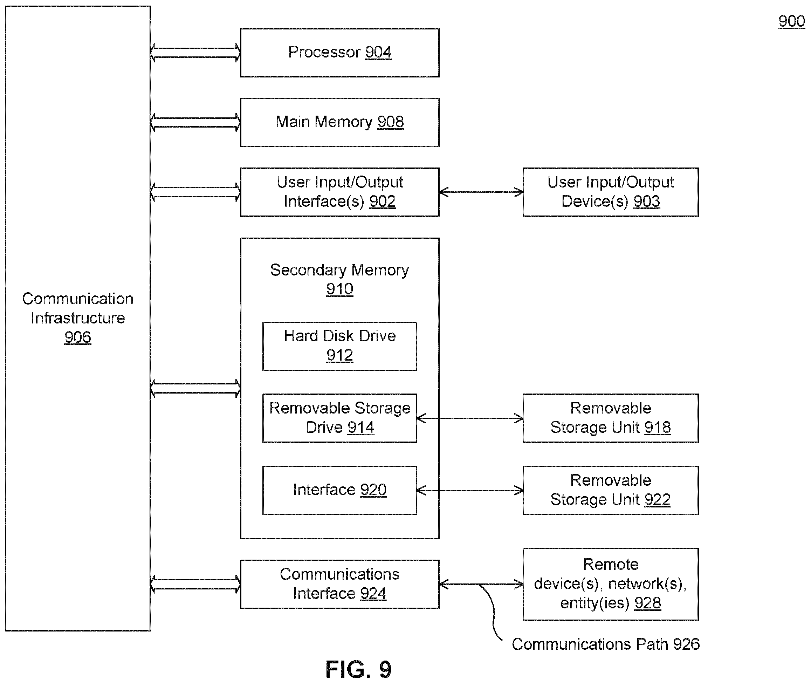

FIG. 8 is a flowchart for a method 800 for mobile payment handover for self-service terminals. Method 800 can be performed by processing logic that can comprise hardware (e.g., circuitry, dedicated logic, programmable logic, microcode, etc.), software (e.g., instructions executing on a processing device), or a combination thereof. For example, the operations described with reference to method 800 can be performed by, or according to, any of the systems, apparatuses, components, techniques, or combinations thereof described herein, such as those described with reference to FIGS. 1-7 above and FIG. 9 below. It is to be appreciated that not all steps may be needed to perform the disclosure provided herein. Further, some of the steps may be performed simultaneously, or in a different order than shown in FIG. 8, as will be understood by a person of ordinary skill in the art.

Method 800 shall be described with reference to FIG. 1. However, method 800 is not limited to that example embodiment.

In 802, the merchant backend system 106 can receive a request (e.g., payment request 160) initiated by a user 102 of a user device 108 to settle an amount due.

In 804, the merchant backend system 106 generates handover data (e.g., payment handover data 162) configured to instruct the user device 108 to settle an amount due associated with the received request (e.g., to complete a payment associated with the payment request 160). The handover data can include, for example, a unique URL (e.g., a unique payment URL) associated with the amount due. The unique URL can include, for example, a base URL, a path to the amount due, and a unique ID of the amount due to be settled.

In some embodiments, the handover data can include two-dimensional image data (e.g., a two-dimensional barcode such as a QR code) that includes the unique URL. In such embodiments, method 800 can include displaying the two-dimensional image data on a display screen of a merchant frontend device 104, where the displayed two-dimensional image data is configured to be captured by a camera of the user device 108 and instruct the user device 108 to open a webpage corresponding to the unique URL.

In some embodiments, the handover data can include a text message (e.g., an SMS text message) that includes the unique URL. In such embodiments, the merchant backend system 106 can transmit the text message to the user device 108, where the transmitted text message can be configured to be received by the user device 108 and instruct the user device 108 to open a webpage corresponding to the unique URL

In some embodiments, the handover data can include an e-mail message that includes the unique URL. In such embodiments, the merchant backend system 106 can transmit the e-mail message to the user device 108, where the transmitted e-mail message can be configured to be received by the user device 108 and instruct the user device 108 to open a webpage corresponding to the unique URL

In some embodiments, the handover data can include NFC data (e.g., an NFC tag) that includes the unique URL. In such embodiments, method 800 can include providing the NFC data on a merchant frontend device 104, where the provided NFC data can be configured to be detected by the user device 108 and instruct the user device 108 to open a webpage corresponding to the unique URL

In some embodiments, the merchant backend system 106 can generate cryptographic data (e.g., a numeric or alphanumeric secret) and include the cryptographic data in the handover data (e.g., in the unique URL following a "#" symbol). In such embodiments, the merchant backend system 106 can receive, from the user device 108, an electronic confirmation 166 that the user device 108 has opened a webpage corresponding to the unique URL and transmit the cryptographic data to a remote device (e.g., an external payment provider system 110) configured to settle the amount due only responsive to the electronic confirmation 166.

In 806, the merchant backend system 106 obtains an electronic confirmation 172 that the amount due has been settled. For example, the merchant backend system 106 can receive, from an external payment provider system 110, an electronic confirmation 172 that the payment has been completed by the user device 108.

In 808, the merchant backend system 106 determines that the amount due has been settled responsive to the electronic confirmation 172.

Various embodiments may be implemented, for example, using one or more computer systems, such as computer system 900 shown in FIG. 9. Computer system 900 may be used, for example, to implement any of the embodiments discussed herein, as well as combinations and sub-combinations thereof.

Computer system 900 may include one or more processors (also called central processing units, or CPUs), such as one or more processors 904. One or more processors 904 may be connected to a communications infrastructure 906 (e.g., a bus).

Computer system 900 may also include user input/output device(s) 903, such as monitors, keyboards, pointing devices, etc., which may communicate with communications infrastructure 906 through user input/output interface(s) 902.

One or more of one or more processors 904 may be a graphics processing unit (GPU). In an embodiment, a GPU may be a processor that is a specialized electronic circuit designed to process mathematically intensive applications. The GPU may have a parallel structure that is efficient for parallel processing of large blocks of data, such as mathematically intensive data common to computer graphics applications, images, videos, etc.

Computer system 900 may also include a main memory 908 (e.g., a primary memory), such as random access memory (RAM). Main memory 908 may include one or more levels of cache. Main memory 908 may have stored therein control logic (i.e., computer software) and/or data.

Computer system 900 may also include secondary memory 910 (e.g., one or more storage devices). Secondary memory 910 may include, for example, a hard disk drive 912 and/or a removable storage drive 914. Removable storage drive 914 may be a floppy disk drive, a magnetic tape drive, a compact disk drive, an optical storage device, tape backup device, and/or any other storage device/drive.

Removable storage drive 914 may interact with a removable storage unit 918. Removable storage unit 918 may include a computer usable or readable storage device having stored thereon computer software (control logic) and/or data. Removable storage unit 918 may be a floppy disk, magnetic tape, compact disk, DVD, optical storage disk, and/ any other computer data storage device. Removable storage drive 914 may read from and/or write to removable storage unit 918.

Secondary memory 910 may include other means, devices, components, instrumentalities or other approaches for allowing computer programs and/or other instructions and/or data to be accessed by computer system 900. Such means, devices, components, instrumentalities or other approaches may include, for example, a removable storage unit 922 and an interface 920. Examples of the removable storage unit 922 and the interface 920 may include a program cartridge and cartridge interface (such as that found in video game devices), a removable memory chip (such as an EPROM or PROM) and associated socket, a memory stick and USB port, a memory card and associated memory card slot, and/or any other removable storage unit and associated interface.

Computer system 900 may further include a communication interface 924 (e.g., a network interface). Communication interface 924 may enable computer system 900 to communicate and interact with any combination of external devices, external networks, external entities, etc. (individually and collectively referenced by reference number 928). For example, communication interface 924 may allow computer system 900 to communicate with remote device(s), network(s), entity(ies) 928 over communications path 926, which may be wired and/or wireless (or a combination thereof), and which may include any combination of LANs, WANs, the Internet, etc. Control logic and/or data may be transmitted to and from computer system 900 via communications path 926.

Computer system 900 may also be any of a personal digital assistant (PDA), desktop workstation, laptop or notebook computer, netbook, tablet, smart phone, smart watch or other wearable, appliance, part of the Internet-of- Things, and/or embedded system, to name a few non-limiting examples, or any combination thereof.

Computer system 900 may be a client or server, accessing or hosting any applications and/or data through any delivery paradigm, including but not limited to remote or distributed cloud computing solutions; local or on-premises software ("on-premise" cloud-based solutions); "as a service" models (e.g., content as a service (CaaS), digital content as a service (DCaaS), software as a service (SaaS), managed software as a service (MSaaS), platform as a service (PaaS), desktop as a service (DaaS), framework as a service (FaaS), backend as a service (BaaS), mobile backend as a service (MBaaS), infrastructure as a service (IaaS), etc.); and/or a hybrid model including any combination of the foregoing examples or other services or delivery paradigms.

Any applicable data structures, file formats, and schemas in computer system 900 may be derived from standards including but not limited to JavaScript Object Notation (JSON), Extensible Markup Language (XML), Yet Another Markup Language (YAML), Extensible Hypertext Markup Language (XHTML), Wireless Markup Language (WML), MessagePack, XML User Interface Language (XUL), or any other functionally similar representations alone or in combination. In some embodiments, proprietary data structures, formats or schemas may be used, either exclusively or in combination with various standards.

In some embodiments, a tangible, non-transitory apparatus or article of manufacture comprising a tangible, non-transitory computer useable or readable medium having control logic (software) stored thereon may also be referred to herein as a computer program product or program storage device. This includes, but is not limited to, computer system 900, main memory 908, secondary memory 910, removable storage unit 918, and removable storage unit 922, as well as tangible articles of manufacture embodying any combination of the foregoing. Such control logic, when executed by one or more data processing devices (such as computer system 900), may cause such data processing devices to operate as described herein.

Based on the teachings contained in this disclosure, it will be apparent to persons skilled in the relevant art(s) how to make and use embodiments of this disclosure using data processing devices, computer systems and/or computer architectures other than that shown in FIG. 9. In particular, embodiments can operate with software, hardware, and/or operating system implementations other than those described herein.

It is to be appreciated that the Detailed Description section, and not any other section, is intended to be used to interpret the claims. Other sections can set forth one or more but not all example embodiments as contemplated by the inventor(s), and thus, are not intended to limit this disclosure or the appended claims in any way.

While this disclosure describes example embodiments for example fields and applications, it should be understood that the disclosure is not limited thereto. Other embodiments and modifications thereto are possible, and are within the scope and spirit of this disclosure. For example, and without limiting the generality of this paragraph, embodiments are not limited to the software, hardware, firmware, and/or entities illustrated in the figures and/or described herein. Further, embodiments (whether or not explicitly described herein) have significant utility to fields and applications beyond the examples described herein.

Embodiments have been described herein with the aid of functional building blocks illustrating the implementation of specified functions and relationships thereof. The boundaries of these functional building blocks have been arbitrarily defined herein for the convenience of the description. Some boundaries can be defined as long as the specified functions and relationships (or equivalents thereof) are appropriately performed. Also, some embodiments can perform functional blocks, steps, operations, methods, etc. using orderings different from those described herein.

References herein to "one embodiment," "an embodiment," "an example embodiment," or similar phrases, indicate that the embodiment described can include a particular feature, structure, or characteristic, but every embodiment can not necessarily include the particular feature, structure, or characteristic. Moreover, such phrases are not necessarily referring to the same embodiment. Further, when a particular feature, structure, or characteristic is described in connection with an embodiment, it would be within the knowledge of persons skilled in the relevant art(s) to incorporate such feature, structure, or characteristic into other embodiments whether or not explicitly mentioned or described herein. Additionally, some embodiments can be described using the expression "coupled" and "connected" along with their derivatives. These terms are not necessarily intended as synonyms for each other. For example, some embodiments can be described using the terms "connected" and/or "coupled" to indicate that two or more elements are in direct physical or electrical contact with each other. The term "coupled," however, can also mean that two or more elements are not in direct contact with each other, but yet still co-operate or interact with each other.

The breadth and scope of this disclosure should not be limited by any of the above-described example embodiments, but should be defined only in accordance with the following claims and their equivalents.

## Claims

1. A computer-implemented method, comprising:
generating, by the at least one processor, handover data configured to instruct a user device to settle an amount due;
obtaining, by the at least one processor, an electronic confirmation that the amount due has been settled; and
determining, by the at least one processor, that the amount due has been settled responsive to the electronic confirmation.

2. The computer-implemented method of claim 1, wherein the handover data comprises a unique uniform resource locator (URL) associated with the amount due.

3. The computer-implemented method of claim 2, wherein the handover data comprises two-dimensional image data comprising the unique URL; and/or
wherein the handover data comprises a text message comprising the unique URL

4. The computer-implemented method of claim 2 or 3, wherein the handover data comprises an electronic mail (e-mail) message comprising the unique URL; and/or
wherein the handover data comprises near field communication (NFC) data comprising the unique URL.

5. The computer-implemented method of any one of claims 1 to 4, wherein:
the handover data comprises cryptographic data;
the electronic confirmation is a first electronic confirmation; and
the method further comprises:
transmitting, by the at least one processor, the cryptographic data to a remote device configured to settle the amount due only responsive to a second electronic confirmation that the user device has opened a webpage corresponding to the unique URL

6. A system for, comprising:
a memory; and
at least one processor coupled to the memory and configured to:
generate handover data configured to instruct a user device to settle an amount due;
obtain an electronic confirmation that the amount due has been settled; and
determine that the amount due has been settled responsive to the electronic confirmation.

7. The system of claim 6, wherein the handover data comprises a unique uniform resource locator (URL) associated with the amount due.

8. The system of claim 7, wherein the handover data comprises two-dimensional image data comprising the unique URL; and/or
wherein the handover data comprises a text message comprising the unique URL

9. The system of claim 7 or 8, wherein the handover data comprises an electronic mail (e-mail) message comprising the unique URL; and/or
wherein the handover data comprises near field communication (NFC) data comprising the unique URL

10. The system of any one of claims 6 to 9, wherein:
the handover data comprises cryptographic data;
the electronic confirmation is a first electronic confirmation; and
the at least one processor is further configured to:
transmit the cryptographic data to a remote device configured to settle the amount due only responsive to a second electronic confirmation that the user device has opened a webpage corresponding to the unique URL

11. A non-transitory computer-readable medium having instructions stored thereon that, when executed by at least one computing device, cause the at least one computing device to perform operations, the operations comprising:
generating handover data configured to instruct a user device to settle an amount due;
obtaining an electronic confirmation that the amount due has been settled; and
determining that the amount due has been settled responsive to the electronic confirmation.

12. The non-transitory computer-readable medium of claim 11, wherein the handover data comprises a unique uniform resource locator (URL) associated with the amount due.

13. The non-transitory computer-readable medium of claim 12, wherein the handover data comprises two-dimensional image data comprising the unique URL; and/or
wherein the handover data comprises a text message comprising the unique URL

14. The non-transitory computer-readable medium of claim 12 or 13, wherein the handover data comprises an electronic mail (e-mail) message comprising the unique URL

15. The non-transitory computer-readable medium of any one of claims 12 to 14, wherein:
the handover data comprises cryptographic data;
the electronic confirmation is a first electronic confirmation; and
the operations further comprise:
transmitting the cryptographic data to a remote device configured to settle the amount due only responsive to a second electronic confirmation that the user device has opened a webpage corresponding to the unique URL
